# EUROPEAN PATENT APPLICATION

(11) **EP 3 168 196 A1**
(43) Date of publication of application: **17.05.2017**
(21) Application number: 15194326.3
(22) Date of filing: 12.11.2015
(51) Int. Cl.: C02F 1/461

(54) **ANTI SCALE DEVICE AND PROCEDURE FOR USE OF THE SAME**

(30) Priority: 11.11.2015 IT UB20155466
(71) Applicant: Bagatella, Maurizio, 35030 Cervarese Santo Croce (PD) (IT); Bagatella, Riccardo, 35030 Cervarese Santa Croce (PD) (IT)
(72) Inventor: Bagatella, Maurizio, 35030 Cervarese Santo Croce (PD) (IT); Bagatella, Riccardo, 35030 Cervarese Santa Croce (PD) (IT)
(74) Representative: Vinci, Marcello

(57) **Abstract**

The invention is an anti scale device for the treatment of the water that flows in a duct of a water supply system, comprising a sealed and tight container (2), internal metallic conductors (31, 32, 41, 42), an external metallic conductor (5) having a portion (51) inside said container (2) and a portion (52) outside and suited to be placed in contact with said duct. Among said components a difference in potential is produced, which electrically charges said external metallic conductor (5), causing a displacement of charges in the water that flows through said duct, at the level of said device.

## Description

The present patent concerns anti scale devices, and in particular it concerns a new anti scale device suited to reduce or even completely prevent the formation of scale in the ducts and equipment present in buildings and suited to remove already existing deposits and encrustations from said ducts. The present patent concerns also the procedure for use of the device itself.

It is known that scale forms in the ducts of the water supply systems of buildings due to the precipitation of the calcium and magnesium salts contained in water; the resulting scale is deposited and produces encrustations on the wet walls of the ducts. Scale deposits are also evident and well known on all the surfaces of water supply systems that are wetted by water, such as the inside of bath fixtures and of taps, the walls of bathtubs and shower cubicles etc.

Said scale deposits produce encrustations that are rather difficult to remove, requiring in any case the use of specific products suited to dissolve scale.

Furthermore, said deposits and encrustations cause considerable damages when they form on the components of devices such as boilers and household appliances such as dishwashers and washing machines.

It is known that to avoid the formation of scale deposits anti scale additives are used, which must be added into said household appliances every time they are used and which contain agents capable of chemically binding to calcium and magnesium ions, preventing their precipitation.

This solution, therefore, involves constant expenses for the purchase of said specific products, as well as the discharge of the residues of said products in waste waters.

Devices are also known, which are suited to be mounted on the ducts located upstream of the water supply systems of buildings and are intended to soften water, which means reducing the concentration of calcium and magnesium salts. Said devices, known as water softeners, have high construction and installation costs, as they require a bypass to be provided on the water duct.

Said devices furthermore require continuous maintenance and the periodical and rather costly replacement of the salts used to obtain the chemical reaction with water. Anti scale devices of the magnetic type are also known. Said devices comprise a sort of sleeve suited to be connected to a duct upstream of the system or to a bypass, inside which water flows. The devices of this type comprise permanent magnets that generate a magnetic field through which water flows. Chemical separation reactions take place due to the action of the magnetic field, thus reducing the formation of scale.

Said devices, therefore, need to be assembled and installed by specialized personnel, which leads to high costs, and furthermore their effectiveness is limited over time. The subject of the present patent is a new anti scale device, suited to reduce or even completely eliminate the formation of scale in the ducts and pipes of buildings and suited to remove the already existing deposits and encrustations from said ducts.

It is the main object of the present invention to provide a device that can be easily and rapidly installed on any duct of the water supply system of a building, and in particular on a duct located upstream of the system.

It is another object of the present invention to provide a single device that can be used alone and have anti scale effects on the entire system downstream of the device itself. It is another object of the present invention to provide a device that can be installed with no need for hydraulic connections or other operations in general on the water supply system.

It is another object of the present invention to provide a device that can be immediately and easily removed and replaced.

It is another object of the present invention to provide a device that has a compact and limited size, so that it is easy to transport.

It is another object of the present invention to provide a device that does not require any power supply and thus does not involve constant power consumption.

It is another object of the present invention to provide a device that allows scale deposits to be removed from the ducts, thus cleaning them, with no need for any chemical agent or mechanical action.

It is another object of the present invention to provide a device that guarantees the correct operation of equipment such as boilers, dishwashers, washing machines etc., thanks to the water treatment that drastically reduces or even eliminates the formation of scale.

It is another object of the present invention to provide a device that can be rapidly adapted to ducts of the type commonly used in the water supply systems of civil or commercial buildings.

These and other direct and complementary objects are achieved by the new anti scale device, comprising in its main parts:
- at least one sealed and tight container, whose inner walls are in contact with at least one electrolytic substance;
- at least one first metallic conductor in contact with said electrolytic substance, contained in said container and fixed to a first wall or cover of the container, said first wall or cover being made of an insulating material;
- at least one second metallic conductor in contact with said electrolytic substance, contained in said container in a position substantially close to said first metallic conductor, but not in direct contact with it, and fixed to a second wall or to the bottom of the container, said second wall or bottom being made of an insulating material;
- at least one external metallic conductor with at least one portion inside said container and at least one portion outside said container, said outside portion being suited to be placed in contact with at least one duct in which the water to be treated flows,
and wherein among said components a difference in potential is created, which electrically charges said external metallic conductor. Placing said external metallic conductor in contact with said duct causes a displacement of charges in the water that flows through said duct, at the level of said device.

Said displacement of charges causes a drastic reduction or even the complete elimination of scale precipitation phenomena. This therefore reduces or even eliminates the formation of scale deposits on the water-wet walls of the ducts located downstream of the device, as well as of all the wet surfaces in general, such as those of the components of boilers or household appliances, bath fixtures, taps etc.

In addition to the above, this causes the detachment of the already present scale deposits from said at least one duct and progressively from all the water-wet ducts located downstream, as the calcium and magnesium ions are dissolved and transported in the water.

In the preferred embodiment of the invention, said at least one container has a cylindrical or prismatic shape and comprises side walls in a metallic material, for example preferably aluminium, a bottom and a cover.

Said bottom and said cover are tightly joined to said side walls and are made of an insulating material, for example nylon or polytetrafluoroethylene.

The inside of said container is covered with a dielectric material suited to prevent the dispersion of the charges.

Said metallic conductors are housed inside said container.

In particular, said metallic conductors have a substantially elongated shape, for example the shape of a bar or a long thin plate, are preferably made of copper, brass, steel etc. or alloys, and are preferably arranged according to the longitudinal direction of said container.

In the preferred embodiment of the invention, the new anti scale device comprises at least two first conductors constrained to said cover of the container and at least two second conductors constrained to said bottom of the container, wherein each first conductor is positioned so that it faces and is close to a second conductor, but not in direct contact with it, and wherein the polarity of said first conductor is opposite to that of said second conductor opposing it.

Furthermore, the polarity of one of said first conductors is opposite to the polarity of the other first conductor. In the same way, the polarity of one of said second conductors is opposite to the polarity of the other second conductor.

Said external metallic conductor, preferably made of steel, in turn comprises a substantially elongated element, wherein said external metallic conductor is partially inserted through an opening provided in said cover of the container, in a substantially intermediate position or equidistant from said first and second internal metallic conductors.

For example, said inside portion of said external metallic conductor is in axial position in said container, while said first and second conductors are positioned symmetrically with respect to said external conductor.

Said opening in the cover is properly sealed, in such a way as to guarantee the tightness of the container.

As already said, the outside portion of said external metallic conductor is suited to be placed in contact with a duct of the water supply system. Said outside portion, in particular, is placed in contact with the external surface of the wall of said duct.

For example, said duct is the one located upstream of the water supply system. Considering the compact and reduced size of the new anti scale device, and considering that said contact between the outside portion of the external conductor and the duct can take place on the external surface of the wall of the duct itself, the new device can be mounted on said duct in any position, preferably upstream of the system, for example in the connection compartment or upstream of the boiler, so that the treated water can successively circulate in the rest of the system.

Said device can be installed on ducts made from any type of material, be it steel, copper or even plastic.

According to the invention, in order to guarantee the correct positioning of said device, the same comprises also at least one fork or hook or clamp, preferably metallic, suited to be coupled with the duct.

In the preferred embodiment of the invention, said metallic fork is constrained to said external conductor, in turn inserted, for example, through a hole or seat provided in said fork.

In the preferred embodiment of the invention, said external conductor has a threaded body, suited to be screwed in said opening in said cover of the container, wherein said opening is correspondingly threaded or provided with threaded fastening means.

Said external conductor can thus be screwed/unscrewed so that it is possible to selectively extract it from the container to a greater or lesser degree by modifying the intensity of the current variation induced in the water.

In particular, for ducts with larger cross section it is advisable to extract said external conductor from the container more than is necessary for ducts with smaller cross section.

The characteristics of the new anti scale device will be highlighted in greater detail in the following description with reference to the attached drawings, which are enclosed hereto by way of non-limiting example.

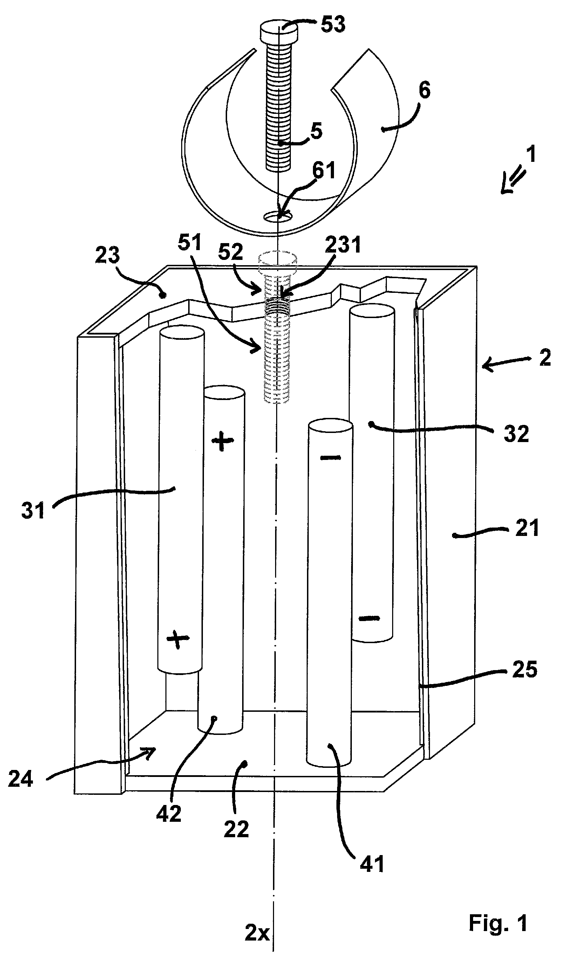

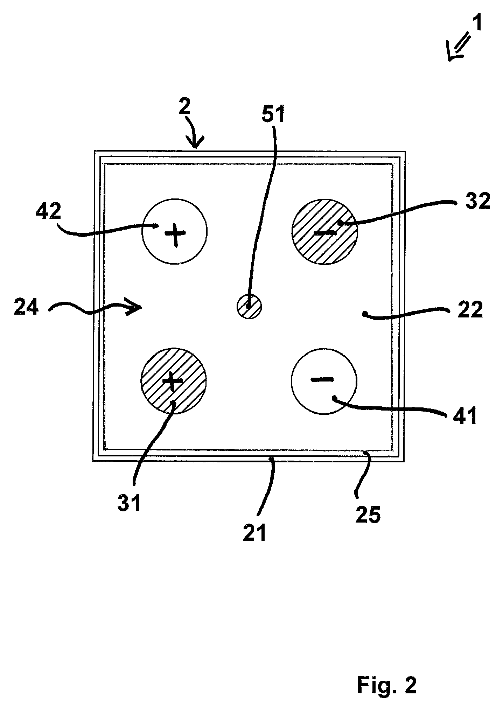

Figure 1 shows a partial vertical section view of the new device (1), while Figure 2 shows a horizontal section view of the new device (1).

The new anti scale device (1) comprises at least one sealed and tight container (2) in a cylindrical or prismatic shape, in turn comprising side walls (21) in a metallic material, for example preferably aluminium, a bottom (22) and a cover (23) tightly joined to said side walls (21). Said bottom (22) and said cover (23) are preferably made of an insulating material, such as nylon or polytetrafluoroethylene.

Said walls (21) of said container (2) are in contact with an electrolytic substance and are preferably covered with at least one layer (25) of dielectric material.

Inside (24) said container (2), the new device (1) comprises at least one but preferably two first internal metallic conductors (31, 32) constrained to said cover (23) of the container (2) that are in contact with said electrolytic substance, too.

Inside (24) said container (2), the new device (1) also comprises at least one but preferably two second internal metallic conductors (41, 42) constrained to said bottom (22) of the container (2), positioned close to said first internal metallic conductors (31, 32) but not in direct contact with them.

In a possible solution illustrated in the figures, each first conductor (31, 32) is arranged so that it faces and is close to a respective second conductor (41, 42), but not in direct contact with it, wherein the polarity of said first conductor (31, 32) is opposite to the polarity of said second conductor (41, 42) opposing it.

Furthermore, the polarity of one of said first conductors (31), for example positive and indicated by the symbol + in the figures, is opposite to the polarity of the other first conductor (32), for example negative and indicated by the symbol - in the figures. In the same way, the polarity of one of said second conductors (41) is opposite not only to the polarity of the respective first conductor (31), but also to the polarity of the other second conductor (42).

Said first and second internal conductors (31, 32, 41, 42) are preferably in an elongated and cylindrical shape or in the shape of a long thin plate, and are made of a metallic material.

Said first and second internal conductors (31, 32, 41, 42) are preferably substantially parallel to each other and arranged according to the longitudinal direction (X) with respect to said container (2), for example symmetrically with respect to the longitudinal axis (2x) of the cylindrical container (2).

The new device (1) comprises also at least one further external metallic conductor (5), preferably made from iron, for example a bar or rod or screw, wherein a portion (51) of said external metallic conductor (5) is housed inside said container (2), as it passes through an opening (231) provided in said cover (23) of the container (2), in a substantially intermediate position or equidistant from said first and second internal metallic conductors (31, 32, 41, 42).

For example, said inside portion (51) of said external metallic conductor (5) is in axial position with respect to said container (2).

Said opening (231) in the cover (23) is properly sealed, in such a way as to guarantee the tightness of the container (2).

Said external metallic conductor (5) comprises also a portion (52) that is outside the container (2) and suited to be placed in contact with the wall of a duct with water to be treated circulating therein.

For example, said outside portion (52) of said external metallic conductor (5) comprises a widened head (53) suited to be placed in contact with said wall of the duct.

The new device (1) preferably comprises also at least one coupling means, for example a fork (6), preferably metallic, suited to be coupled with the duct.

In the preferred solution, said metallic fork (6) is provided with a through hole or seat (61) for the insertion of said outside portion (52) of said external metallic conductor (5) therethrough.

In the preferred solution, said external metallic conductor (5) has a threaded body, suited to be screwed in said opening (231) made in said cover (23) of the container (2), wherein said opening (231) is preferably correspondingly threaded or provided with threaded fastening means.

Said external metallic conductor (5) can thus be screwed/unscrewed so that it is possible to selectively extract it from the container (2) to a greater or lesser degree by modifying the intensity of the current variation induced in the water.

In particular, when it is necessary to install the device (1) on ducts with larger cross section it is advisable to extract said external conductor (5) from the container (2) more than is necessary for ducts with smaller cross section.

According to a possible example of embodiment, the dimensions of the container of the new device (1) are the following: 50-100 mm in width and 120-150 mm in height. Various studies and experiments have shown that a device with these dimensions is especially useful and effective for the removal of scale in ducts with diameter included between ½" and 1" and also for the almost complete elimination of scale precipitation.

These are the schematic outlines that are sufficient to the expert in the art to carry out the invention, consequently, during the actual construction phase variant may be developed that do not affect the substance of the innovative concept expressed herein. Therefore, with reference to the above description and the attached drawings, the following claims are expressed.

## Claims

1. Anti scale device for the treatment of the water that flows in at least one duct of a water supply system in general, comprising in its main parts:
• at least one sealed and tight container (2) with one or more walls (21) that are made of a metallic material and in contact with at least one electrolytic substance;
• at least one first internal metallic conductor (31, 32) in contact with said electrolytic substance, contained in said container (2) and constrained to a first wall or cover (23) of the container (2), said first wall or cover (23) being made of an insulating material;
• at least one second internal metallic conductor (41, 42) in contact with said electrolytic substance, contained in said container (2) in a position substantially close to said first metallic conductor (31, 32) but not in contact with it, and fixed to a second wall or to the bottom (22) of the container (2), said second wall or bottom (22) being made of an insulating material;
• at least one external metallic conductor (5) having at least one portion (51) inside said container (2) and at least one portion (52) outside said container (2), said outside portion (52) being suited to be placed in contact with said at least one duct in which the water to be treated flows,
and wherein among said components a difference in potential is created, which electrically charges said external metallic conductor (5), causing a displacement of charges in the water that flows through said duct, at the level of said device.

2. Anti scale device (1) according to claim 1, **characterized in that** it comprises at least two of said first internal metallic conductors (31, 32) constrained to said cover (23) of the container (2) and at least two of said second internal metallic conductors (41, 42) constrained to said bottom (22) of the container (2), positioned close to said first internal metallic conductors (31, 32), but not in direct contact with them, and wherein each first conductor (31, 32) is arranged so that it faces and is close to a respective second conductor (41, 42), but not in direct contact with it, and wherein the polarity of said first conductor (31, 32) is opposite to the polarity of said second conductor (41, 42) opposing it.

3. Anti scale device (1) according to claim 2, **characterized in that** the polarity of one of said first conductors (31) is opposite to the polarity of the other first conductor (32), and the polarity of one of said second conductors (41) is opposite to the polarity of the respective first conductor (31), but also to the polarity of the other second conductor (42).

4. Anti scale device (1) according to any of the preceding claims, **characterized in that** said container (2) has a cylindrical or prismatic shape, and comprises side walls (21) made of a metallic material, a bottom (22) and a cover (23) made of an insulating material, and wherein the inside of said container (2) is completely or partially covered with at least one layer (25) of dielectric material.

5. Anti scale device (1) according to any of the preceding claims, **characterized in that** said first and second internal metallic conductors (31, 32, 41, 42) have an elongated and cylindrical shape or the shape of a long plate and are substantially arranged so that they are parallel to each other and to the longitudinal axis (2x) of said cylindrical container (2).

6. Anti scale device (1) according to any of the preceding claims, **characterized in that** said external metallic conductor (5) comprises a bar or rod or screw or elongated element in general, wherein said portion (51) housed inside said container (2) passes through a properly sealed opening (231) provided in said cover (23) of the container (2), and wherein said external metallic conductor (5) is at least partially threaded so that it can be screwed into said opening (231) of said cover (23) of the container (2) so that it is possible to selectively extract said external metallic conductor (5) from the container (2) to a greater or lesser degree by modifying the intensity of the current variation induced in the water according to the diameter of said at least one duct.

7. Anti scale device (1) according to any of the preceding claims, **characterized in that** it preferably comprises also at least one coupling means or fork (6), preferably metallic, constrained to said external metallic conductor (5) and suited to be coupled with the duct.

8. Anti scale device (1) according to any of the preceding claims, **characterized in that** said container (2) has a diameter of 50-100 mm and is 120-150 mm in height, and is suited to be installed on ducts having a diameter of ½"-1".

9. Process for the treatment of the water circulating in at least one duct of a water supply system, **characterized in that** it comprises the application of said at least one device (1) according to one or more of the preceding claims, in such a way that said at least one external metallic conductor (5) is in contact with said at least one duct, so that said displacement of charges produced in the water causes the drastic reduction or the complete elimination of scale precipitation phenomena and the detachment of the already present scale deposits from said at least one duct and progressively from all the water-wet downstream ducts.

10. Process according to the preceding claim, **characterized in that** said device (1) is applied to said at least one duct located upstream of the water supply system.
